# EUROPEAN PATENT SPECIFICATION

(11) **EP 2 590 044 B1**
(45) Date of publication and mention of the grant of the patent: **22.02.2017**
(21) Application number: 11008749.1
(22) Date of filing: 03.11.2011
(51) Int. Cl.: G05D 19/02

(54) **Reduced vibration setpoint generator**
Sollwertgeber mit verringerten Schwingungen
Générateur de consigne de réduction de vibrations

(43) Date of publication of application: 08.05.2013
(73) Proprietor: Robert Bosch GmbH, 70442 Stuttgart (DE)
(72) Inventor: De Graaff, Wim, 5931 NK Tegelen (NL)
(74) Representative: Thürer, Andreas

(56) References cited:
- EP-A2- 1 803 967
- US-A- 4 676 649
- US-A- 5 897 006
- US-A- 5 960 969
- US-B2- 6 920 378

## Description

The present invention is directed to a method and an apparatus for moving objects between at least two predefined positions. The invention is directed to the movement of wafers, however it is noted, that the invention may as well be applied to other objects to be moved or transported. Such methods and apparatus which serve to move objects along predefined transport paths, are known from the state of the art. For most applications these movements are not very critical. However, for some applications the objects to be moved are very sensitive to high accelerations or vibrations.

Usually for transporting the objects, in a first section of the transport path the object is accelerated and in a last section of the transport path the object is again decelerated before reaching its final position. Due to the inertia of the object to be moved or other parts of the transport apparatus, vibrations may occur especially as a consequence of the acceleration or also as a consequence of the deceleration.

A possible solution to avoid or reduce these vibrations would be to measure them and to counteract by respective movements of the drives. However, a motion controller can not control vibrations of mechanics if these vibrations are not measured. The use of measurement devices however would increase the costs of corresponding apparatus'.

US 2,801,351 describes a method and an apparatus for control of system output in response to system input. More specifically this document relates to a method and an apparatus for taking a given input signal or force, delaying the signal or force discrete intervals of time to thereby produce a plurality of component signals or forces, each of them is then amplified or attenuated. However, this method is not able to avoid vibrations caused by inertia effects of an object to be moved.

US 6,920,378 B2 describes a command generation combining input shaping and smooth baseline functions according to the preamble of claim 1. Thereby a control entity generates a desired motion command for a physical system. A command generator then produces a shaped-smooth reference command for the physical system from the desired motion command that will cause the physical system to move in the desired motion without unwanted dynamics. Also this method is very complex for practical use.

US 5,897,006 describes a method for deactivating swing control on a suspension crane from which a load is suspended by a hoisting rope attached to a carriage driven by a motor controller by a motion controller. Herein, no ratio between a first acceleration and a third acceleration is shown which is smaller than 1 and is a value which is characterizing the damping of the oscillation which has been exerted or induced by the first acceleration.

It is therefore an object of the invention to provide a method and a device which allows a cost effective compensation of vibrations during the movement of a wafer as an object, especially such vibrations which are caused by the acceleration and deceleration of the wafer, especially due to inertia effects.

This problem is solved by the method according to the independent claim 1 and the device according to the independent claim 9. Advantageous and embodiments are object of the subclaims.
According to the invention in at least one further section of the transport path of the object the movement of the object is accelerated or decelerated to damp a vibration in the movement of the object caused by at least one acceleration or deceleration in a section, especially another section, for example in first section or the (future) deceleration (to be) caused in another section, for example in the last section.

In case of the deceleration in fact the deceleration in the last section will damp the vibrations produced by the deceleration in the further section. However, the further section is introduced for damping the vibrations which would be induced by the deceleration in absence of the deceleration in the further section. Therefore the invention preferably suggests to use at least one further section with an acceleration or deceleration to damp the oscillations produced by the acceleration or deceleration (in the first or the last section) in absence of the mentioned further sections.

Preferably there is no movement at the given points A and B and those points are at a predetermined path distance from each other. Therefore, the first section serves to accelerate the object up to a certain speed and the last section is provided to decelerate the movement of the object to bring it to a rest at the second point B. The point A and B may also be at identical positions for example, if the object is moved along a circular or generally spoken a closed path.

With the methods known from the state of the art the objects are usually accelerated and then are held at a certain speed and then are decelerated to reach the second point B. In this case, the above-mentioned vibrations may occur. E. g. in case of the transport of a wafer, those wafers may be transported around a certain axis, the so-called "theta-axis". In this case, a wafer handler drives a mechanical part that vibrates when the theta-axis is moved with a point-to-point command. This vibration occurs due to inertia effects. The vibration is usually not measured, so it is not possible to damp it by the way of a feedback loop. The vibration frequency of those vibrations is the natural frequency of the mechanics. Usually, this frequency is below 10 Hz. A filter element, like a notch filter, cannot be used due to this low frequency and the controllers used for the driving.

Therefore, the invention is a method to damp those vibrations which can be expected to be exerted by the mechanical equipment. Therefore, the vibration according to a preferred embodiment of the invention is not measured, but estimated or calculated according to a swing model.

For the acceleration process, after an acceleration of the object in the first section, the acceleration rate is reduced or even set to 0 and then a second, especially lower acceleration is used to compensate vibration or swinging phenomena which will occur caused by the inertia of the object to be moved.

In another preferred embodiment the transport path is divided into sections which comprise constant acceleration rates. In one very preferred embodiment the transport path is divided into seven sections. In this case, two further sections are used to compensate the vibrations which occur during acceleration of the object and which will occur during deceleration of the object before the second point B.

Another transport section of the path is used to move the object at a constant speed. The length of this section depends on the length of the transport path.

Preferably the temporal duration of at least two sections is equal or essentially equal, preferably the temporal duration of at least three sections is equal or essentially equal, preferably the temporal duration of at least four sections is equal or essentially equal, preferably the temporal duration of at least five sections is equal or essentially equal.

In another preferable embodiment of the invention an absolute value of the acceleration in the first section is higher than the absolute value of the deceleration in the last section.

Therefore, in another preferred embodiment of the invention, the object beginning from point A is accelerated at a first acceleration rate, afterwards the acceleration is reduced (second section), afterwards the object is accelerated but preferably at a lower acceleration rate than in the first acceleration section. This will be illustrated into more detail with reference to the drawings.

In the following, a deceleration is understood to be a negative acceleration, i. e. a breaking of the movement of the object.

In a preferred embodiment, the object is not accelerated or decelerated in the second section of the transport path. Also, in a further embodiment the object is not accelerated or decelerated in the second to last section, of the transport path. This means that in these sections the object is moved at a constant speed.

In another embodiment of the invention, in at least one further section of the transport path the movement of the object is decelerated or accelerated to damp a vibration in the movement of the object caused by the deceleration in the last section of the transport path or the acceleration caused in the first section of the transport path.

Actually the deceleration in the last section damps the vibration caused by the deceleration in the further section.

In another preferred embodiment, the ratio between the acceleration in the further section and the acceleration in the first section depends of the damping of a swinging of the object around a given point.

In another preferred embodiment, in at least one section, the absolute value of the acceleration or deceleration remains constant. This means that in this embodiment the acceleration is increased or decreased stepwise.

It would also be possible that the acceleration or deceleration is increased or decreased according a mathematical function e. g. a geometrical function as a sine or cosine Function.

In another very preferred embodiment, the object to be moved is a wafer. The invention is very well applicable to the movement of wafers, because for these wafers vibrations should be avoided, as far as possible.

In another very preferred embodiment, the transport path at least partially has a circular shape. This means that the object is moved preferably around a given axis, e. g. by the use of a moving arm. However, the transport path may also be a linear path or may comprise both circular (or generally curved) and linear sections.

In another very preferred embodiment of the method, a time optimal path between the positions A and B is calculated, based on the acceleration duration Tq, the ratio r and preferably also the constraints for acceleration and velocity. In another preferred embodiment also the constraints for jerk are used.

The present invention is also directed to a device according to claim 9.

According to the invention, in at least one further section the movement of the wafer as the object is accelerated or decelerated to damp a vibration in the movement of the object caused by the acceleration or deceleration in another section, as for example the acceleration in a first section or the (future) deceleration in the last section.

More into detail in case of the invention the deceleration in the last section serves to damp the oscillation produced in another precedent section. However, the invention serves to reduce the oscillations produced in the last section.

In another preferred embodiment the driving means drives a transport arm to which the object is attached. In this embodiment the object is moved along a curved or circular path. In another embodiment the drive means is a rotator drive means. Very preferably the drive means comprises an electro motor, especially a servo motor.

In another preferred embodiment, the device comprises a clean room in which the transport path extends. In this embodiment, the object is moved in a clean room. Preferably the device comprises a housing which surrounds the clean room. Especially for the transport of wafers it is preferred if they are transported in a clean room. Therefore, preferably the object is transported under sterile conditions.

Other advantageous or embodiments will become clear from the accompanying drawings.

Therein showed:
- Fig. 1: a schematic view of a device according to the invention;
- Fig. 2: a schematic view to illustrate the problem to be solved by the invention;
- Fig. 3: a figure illustrating an oscillation of a pendulum;
- Fig. 4a, b: drawings illustrating the physical concept underlying the invention;
- Fig. 5: a diagram showing a typical transport path according to the invention;
- Fig. 6: diagram illustrating reaction oscillation which appears according to the state of the art;
- Fig. 7: an oscillation reaction with a method according to the invention;
- Fig. 8: another possibility for the method according to the invention;
- Fig. 9: another oscillation according to the state of the art;
- Fig. 10: another resulting oscillation with the method according to the invention; and
- Fig. 11: another method according to the invention;

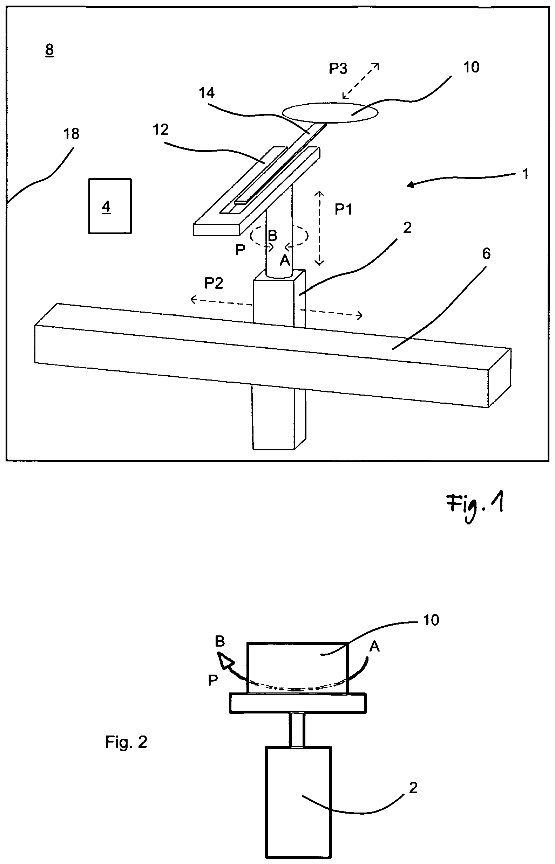

Fig. 1 illustrates a device 1 to which the invention could be applied. The reference numeral 10 denotes an object to be moved which in this case is a wafer. The object 10 is arranged at an arm 14 which is rotatable around direction P. Therefore, the tips of the arrow P also indicate the end positions A and B.

Furthermore, the object is also moveable in the directions P1, P2 and P3, as indicated by the respective arrows. The invention is also applicable to the movements in this mentioned directions P1, P2 and P3.

Reference numeral 2 denotes a driving means which is responsible for the movement of the object along the transport P. This driving means 2 is arranged on a carrier 6 and is also moveable in the direction P2. Moreover, a lifting means (not shown) allows a movement of the arm 14 and therefore also the object 10 in the direction P1. The reference numeral 12 denotes a second driving means which serves to move the object in the direction P3.

The whole device 1 is arranged in a clean room 8 to avoid contamination of the object 10. Therefore, a housing 18 may be provided which surrounds the clean room 8. Furthermore, it would be possible that some of the driving means 2, 12 are arranged outside the clean room 8 and only the object 10 is permanently arranged in the clean room 8.

Reference numeral 4 denotes a control device which controls the driving means 2 or the movements of the arm 14. Therefore the control device 4 controls the movement of the object along the transport path P. The control device may also control other driving means which move the object along the paths P1 - P3.

Fig. 2 shows a schematic drawing to illustrate the problem underlying the invention. In this case the driving means 2 like a motor is disclosed which drives an object 10 to be moved, here in a rotative direction. Therefore, a first rotational position may be considered as position A and another rotative position as position B. Therefore, the test set up may also contain a linear motor with a pendulum. The angle of the pendulum is preferably measured with an encoder. When executing a point-to-point command on the motor, the pendulum starts to oscillate at the acceleration and at the deceleration. After the acceleration and the deceleration the oscillation is damped by friction of the system. The oscillation is due to the inertia of the object to be moved.

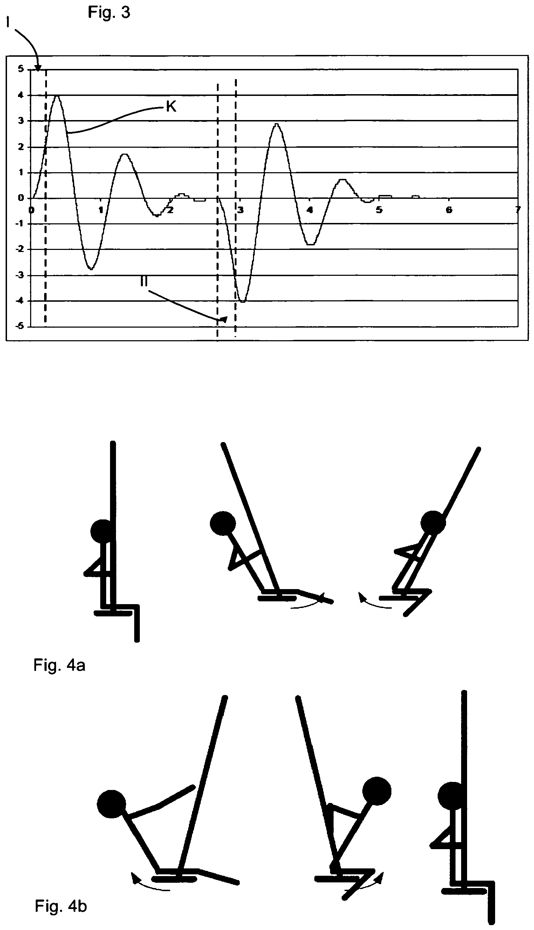

Fig. 3 illustrates the oscillating motion of the object 10 during an after-acceleration period or during an after-deceleration period. The acceleration appears in a section I and the deceleration appears in a section II of the diagram. The curve K illustrates the movement of the pendulum whose amplitude decreases due to damping processes. It is an object of the invention to damp these vibration processes, especially without measuring them.

Fig. 4a and 4b illustrate an example of the physical concept underlying the invention. The solution according to the invention is based on the concept of a playground swing. The swing starts to oscillate by changing the center or gravity. By leaning backwards (see 2^{nd} image of fig. 4a) a forward force is applied on the swing. By leaning forward a backward force is applied on the swing (3^{rd} figure of figure 4a).

The swinging stops when leaning backwards while the swing moves backwards (see left picture of figure 4b) and when leaning forwards while the swing moves forward (see 2^{nd} image of figure 4b). Therefore, fig. 4a illustrates the start of a swinging by changing the center of gravity and fig. 4b illustrates deceleration or damping of the swinging by changing the center of gravity at different moments.

In one preferable method of the invention, the system swing remains unchanged during the first swing, but suppresses the second swing which is in the opposite direction. In this case more gravity-produced force is needed to start the oscillation than to stop the oscillation, because the friction helps to stop the swing.

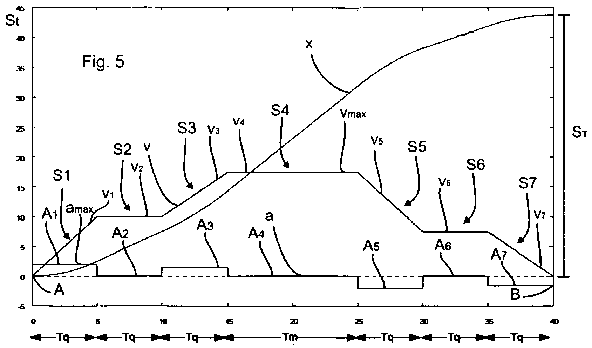

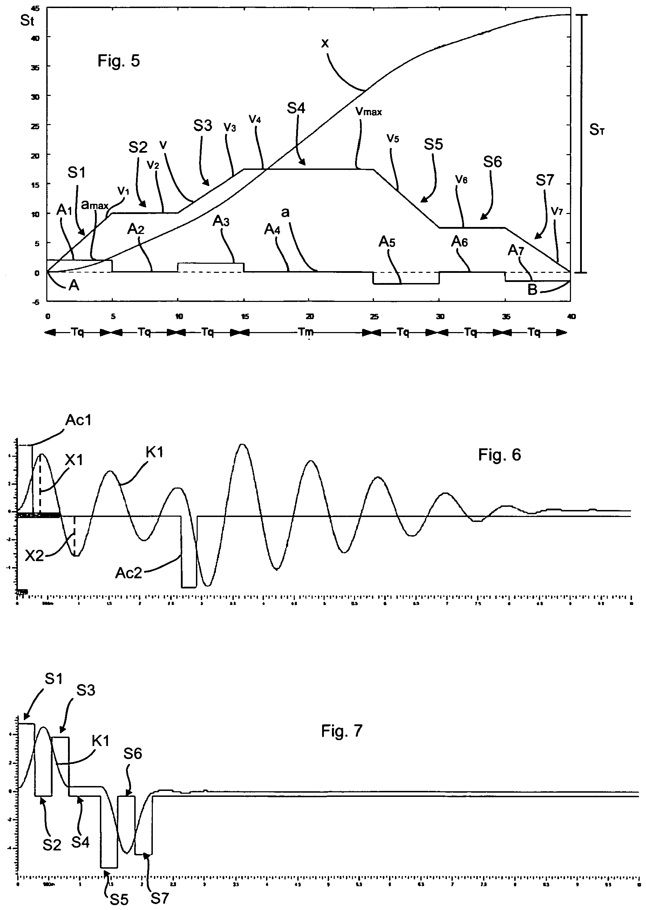

Fig. 5 illustrates a diagram for a second order reduced vibration set point generator (RVSG). In this diagram value Sₜ indicates the distance to be travelled by the moved object, vₘₐₓ indicates the maximum velocity, aₘₐₓ the maximum acceleration, Tq the acceleration duration and r the ratio between the first and second acceleration.

In this example the total profile consists of seven subsequent segments or sections S1 to S7.

The duration of the segment 1 is equal to Tq and the acceleration applied is equal to A₁ which is smaller or equal aₘₐₓ, i. e. the maximum acceleration.

The duration of the segment S2 is equal to Tq and the acceleration is 0.

The duration of the segment S3 is also equal to T_{q} and the acceleration is equal to A₂ which is equal r * A₁. In this case r is smaller than 1 and is a value which is characterizing the damping of the oscillation. This second acceleration will counteract or damp the oscillation which has been exerted or induced by the first acceleration.

The duration of segment or section S4 is equal to Tm and the acceleration A₄ is 0. The duration or length of this segment 4 depends on the path which has to be travelled by the object. In this segment the object is transported at a constant velocity and therefore no oscillation will occur.

The duration of the segment or section S5 is again equal to T_{q} and the acceleration here is equal to -A₁, i. e. has the same absolute value as the acceleration in segment 1, but in the opposite direction (ie with a negative sign).

The duration of the segment 6 is equal to T_{q} and the acceleration A₆ is 0.

The duration of the segment 7 is again equal to T_{q} and the acceleration A₇ is equal to -A₂ (which is equal to -r * A₁). Therefore, also by the deceleration in the last section the oscillation is damped. The reference symbols v₁ - v₇ refer to the (at least partially varying) speeds in the different sections.

This model is calculated for the case that the acceleration at the beginning of the movement and the deceleration at the end of the movement are basically the same which allows a transport of the object at the maximum speed possible.

Therefore, the input parameters T_{q} and r are determined by the oscillation reaction on a normal point-to-point command, as known from the state of the art. In fig. 6 the curve K1 illustrates the normal oscillation reaction. In this diagram X1 is the absolute value of the first peak at the time t1 and X2 is the absolute value of the second peak at time t2. Therefore, the ratio is: r = x₂/x₁.

The acceleration is indicated by the symbol A₁. T_{q} is therefore corresponding to one increasing or decreasing flank of the curve K1. Therefore the acceleration duration: T_{q} = (t₂ - t₁)/2.

As mentioned above, often this oscillation reaction cannot be measured. A possibility to find out the above-mentioned values is an experiment i. e. to start with a ratio of 1 and then fine-tune T_{q}. Next the ratio r is decreased to find an optimum. The result of this fine-tuning is shown in figure 7.

Again the single segments or sections S1 to S7 are illustrated. As can be seen in the segment S3, the acceleration counteracts the decreasing flank of curve K1 and therefore leads to a damping of this curve. Also, the last segment S7 counteracts the movement of the object and therefore also leads to a damping.

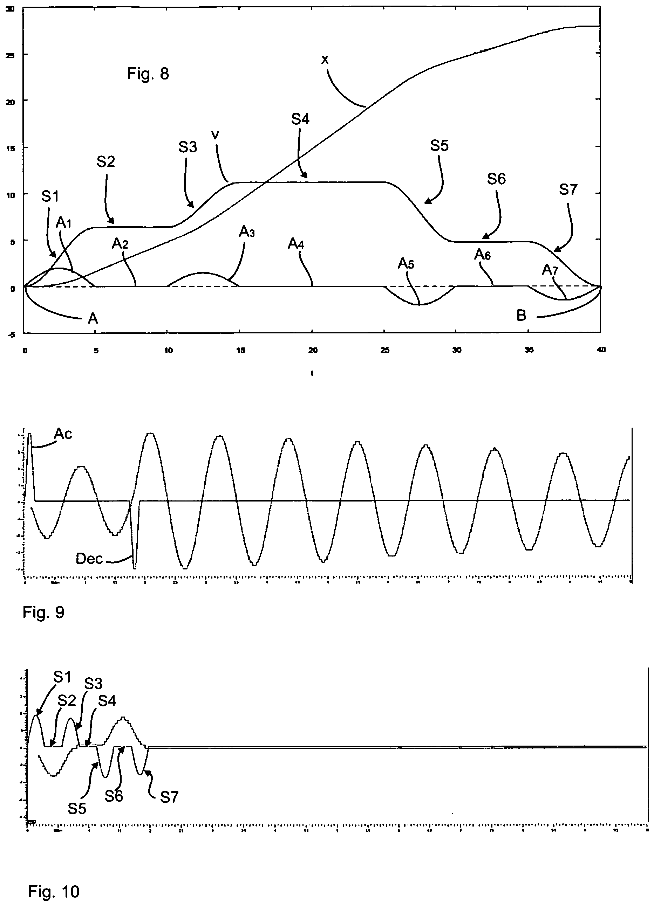

Fig. 8 illustrates another method for reaching the damping. The difference between the method according to fig. 5 is that in this case the accelerations are not linear or stepwise, but the accelerations are always geometrical or sine functions. However, it would be possible to combine the two methods, i. e. to have both constant accelerations and segments and sine accelerations, as shown in fig. 8. As can be seen in fig. 8, also the acceleration A₃ in segment S3 is lower than the acceleration in segment S1 and the acceleration in segments or sections S7 is also lower than the acceleration in segments or sections S5. Also, in this case the whole profile has seven segments and also the acceleration durations are equal T_{q}.

Fig. 9 again illustrates an undamped situation in which one acceleration Ac and one deceleration Dec is used.

One difference between the sine accelerated RVSG compared to the 2^{nd} order RVSG is the duration of the setpoint generation. The sine acceleration RVSG is slower than the 2^{nd} order variant. However, in some cases it might be a better choice, because the peak of the first oscillation is not that high, and if the maximum acceleration is limited e. g. by an I2T-constraint, the maximum acceleration of the sine accelerated RVSG can be higher.

Fig. 10 again illustrates the situation with a damping according to the invention. Also in this case a considerably damping can be reached.

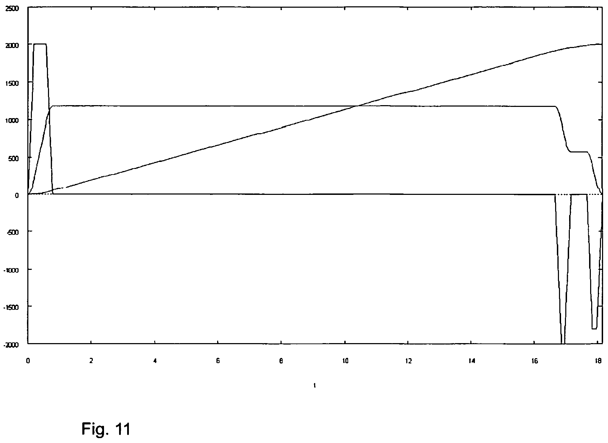

Fig. 11 shows another example of a inventive method. This method is mentioned to as 3^{rd} order RVSG which gives a user control over the jerks. In this method there is only one acceleration period (i. e. no vibration reduction at the start) and two deceleration periods (a vibration reduction at the end). This method is especially interesting if very exact positioning at the end point is desired.

In most pick and place applications the end-position accuracy is important and the accuracy during the movement is less important. If the vibration caused by the acceleration is already naturally dumped before the deceleration, there may be no need to reduce the vibration during the acceleration. By using only one acceleration period, the axis will reach the required velocity sooner than with two acceleration periods and the total movement time reduces. For the first acceleration A₁ the maximum acceleration may be used.

Therefore, in one preferred embodiment of the invention at least two deceleration periods are used or in at least two different sections there is a deceleration wherein between these two sections preferably one section is arranged in which no or less acceleration occurs.

As mentioned, variants of the RVSG are possible which combine the 2^{nd} order, 3^{rd} order and the sine acceleration methods. Especially the variant with the 2^{nd} order acceleration and the sine shaped deceleration could be interesting.

The 2^{nd} order RVSG and the sine accelerated RVSG calculate a time optimal path between A and B, based on the acceleration duration Tq, the ratio r and the constraints for acceleration and velocity. The 3^{rd} order RVSG calculates a time optimal path between A and B, based on the acceleration duration Tq, the ration r and the constraints for acceleration, velocity and jerk.

### List of reference numerals

- 1: device
- 2: driving means
- 6: carrier
- 4: control device
- 8: clean room
- 10: object
- 12: second driving means
- 14: arm
- 18: housing

- A₁ - A₇: accelerations
- v₁ - v₇: speeds
- S1 - S2: sections, segments
- K, K1: curve
- P, P1 - P3: moving directions
- A, B: end points of movement

## Claims

1. Method for damping vibrations which can be expected to be exerted by mechanical equipment for moving a wafer (10) along a predetermined transport path (P), wherein the wafer (10) is moved from a first geometrical position (A) to a second geometrical position (B) along the predetermined transport path (P) and wherein the movement of the wafer (10) is divided in a plurality of subsequent path sections (S1, S2,.., Sn) and wherein the movement of the wafer (10) is accelerated during movement in the first path section (S1) with a first predetermined acceleration (A1) and is decelerated during movement in the last path section (Sn) with a last predetermined deceleration (An), wherein the wafer (10) is moved in a second section (S2) subsequent to the first section (S1) with an acceleration (A2) having an absolute value which is lower than the absolute value of the first acceleration (A1) and wherein the wafer (10) is moved in a second to last section (Sn-1) before the last section (Sn) at a deceleration (An-1) having an absolute value which is lower than the absolute value of the last deceleration (An)
**characterized in that**
in at least one further section (S3, Sn-2) of the transport path (P), which further section is located between the second section (S2) and the second to last section (Sn-1), the movement of the wafer (10) is accelerated or decelerated with a third acceleration (A3) such that a ratio between the first acceleration (A1) and the third acceleration (A3) is smaller than 1 and is a value which is characterizing the damping of the oscillation which has been exerted or induced by the first acceleration (A1), to damp a vibration in the movement of the wafer (10) caused or to be caused by the acceleration or the deceleration in at least one of the sections.

2. Method according to claim 1,
**characterized in that**
the wafer (10) is not accelerated or decelerated in the second section of the transport path (P).

3. Method according to claim 1 or 2,
the wafer (10) is not accelerated or decelerated in the second to last section (Sn-1) of the transport path (P).

4. Method according to claim 1,
**characterized in that** in at least one further section (Sn-2, S3) of the transport path (P) the movement of the wafer (10) is decelerated or accelerated to damp a vibration in the movement of the wafer (10) caused by the deceleration in the last section (Sn) or the acceleration caused in the first section (S1).

5. Method according to at least one of the preceding claims,
**characterized in that**
in at least one section (S1, S2, .. Sn) the absolute value of the acceleration or deceleration remains constant.

6. Method according to at least one of the preceding claims,
**characterized in that**
the wafer (10) is transported by the mechanical equipment around a theta-axis.

7. Method according to at least one of the preceding claims,
**characterized in that**
a time optimal transport path (P) is calculated.

8. Method according to at least one of the preceding claims,
**characterized in that**
the accelerations (A1, A2, A3) are linear or geometrical or sine functions or combinations thereof.

9. Device (1) for damping vibrations which can be expected to be exerted by mechanical equipment for moving a wafer (10) along a predetermined transport path (P) wherein the device comprises
a driving means (2) for moving the wafer (10), and
a control device (4) for controlling the driving means (2),
wherein the driving means (2) controls the movement such that the movement of the wafer (10) is divided in a plurality of subsequent path sections (S1, S2, Sn) and that the movement of the wafer (10) is accelerated during movement in the first path section (S1) with a first predetermined acceleration (A1) and is decelerated during movement in the last path section (Sn) with a last deceleration (An), and
wherein the driving means (2) further controls the movement such that the wafer (10) is moved in a second section (S2) subsequent to the first section (S1) with an acceleration (A2) having an absolute value which is lower than the absolute value of the first acceleration (A1) and wherein the wafer (10) is moved in a second to last section (Sn-1) before the last section (Sn) at a deceleration (An-1) having an absolute value which is lower than the absolute value of the last deceleration (An)
**characterized in that**
the driving means (2) further controls the movement such that in at least one further section (S3, Sn-2), which further section is located between the second section (S2) and the second to last section (Sn-1), the movement of the wafer (10) is accelerated or decelerated with a third acceleration (A3) such that a ratio between the first acceleration (A1) and the third acceleration (A3) is smaller than 1 and is a value which is characterizing the damping of the oscillation which has been exerted or induced by the first acceleration (A1), to damp a vibration in the movement of the wafer (10) caused or to be caused by one acceleration or one deceleration.

10. Device (1) according to claim 9,
**characterized in that** the driving means (2) is configured to drive a transport arm (14) to which the wafer (10) is attached.

11. Device (1) according to claim 9 or 10,
**characterized in that**
the device comprises a clean room (8) in which the transport path (P) extends.

12. Device (1) according to at least one of the claims 9 to 11,
**characterized in that**
the mechanical equipment is configured to transport the wafer (10) around a theta-axis.

13. Device (1) according to at least one of the claims 9 to 12,
**characterized in that**
the accelerations (A1, A2, A3) are linear or geometrical or sine functions or combinations thereof.

## Patentansprüche

1. Verfahren zum Dämpfen von Schwingungen, von denen erwartet werden kann, dass sie von mechanischen Gerätschaften zum Bewegen eines Wafers (10) entlang eines festgelegten Transportpfads (P) ausgeübt werden, wobei der Wafer (10) von einer ersten geometrischen Position (A) zu einer zweiten geometrischen Position (B) entlang des festgelegten Transportpfads (P) bewegt wird, und wobei die Bewegung des Wafers (10) in eine Vielzahl aufeinander folgender Pfadabschnitte (S1, S2, ..., Sn) unterteilt wird, und wobei die Bewegung des Wafers (10) während der Bewegung in dem ersten Pfadabschnitt (S1) mit einer ersten festgelegten Beschleunigung (A1) beschleunigt wird und während der Bewegung in dem letzten Pfadabschnitt (Sn) mit einer letzten festgelegten Entschleunigung (An) entschleunigt wird, wobei der Wafer (10) in einem zweiten Abschnitt (S2) nach dem ersten Abschnitt (S1) mit einer Beschleunigung (A2) mit einem Absolutwert, der niedriger als der Absolutwert der ersten Beschleunigung (A1) ist, bewegt wird, und wobei der Wafer (10) in dem vorletzten Abschnitt (Sn-1) vor dem letzten Abschnitt (Sn) mit einer Entschleunigung (An-1) mit einem Absolutwert bewegt wird, der niedriger als der Absolutwert der letzten Entschleunigung (An) ist,
**dadurch gekennzeichnet, dass**
in mindestens einem weiteren Abschnitt (S3, Sn-2) des Transportpfads (P), wobei sich der weitere Abschnitt zwischen dem zweiten Abschnitt (S2) und dem vorletzten Abschnitt (Sn-1) befindet, die Bewegung des Wafers (10) mit einer dritten Beschleunigung (A3) beschleunigt oder entschleunigt wird, so dass ein Verhältnis zwischen der ersten Beschleunigung (A1) und der dritten Beschleunigung (A3) kleiner als 1 ist und ein Wert ist, der die Dämpfung der Oszillation kennzeichnet, die durch die erste Beschleunigung (A1) ausgeübt oder induziert worden ist, um eine Schwingung in der Bewegung des Wafers (10) zu dämpfen, die durch die Beschleunigung oder die Entschleunigung in mindestens einem der Abschnitte verursacht worden ist oder verursacht wird.

2. Verfahren nach Anspruch 1, **dadurch gekennzeichnet, dass** der Wafer (10) in dem zweiten Abschnitt des Transportpfads (P) nicht beschleunigt oder entschleunigt wird.

3. Verfahren nach Anspruch 1 oder 2, wobei der Wafer (10) in dem vorletzten Abschnitt (Sn-1) des Transportpfads (P) nicht beschleunigt oder entschleunigt wird.

4. Verfahren nach Anspruch 1, **dadurch gekennzeichnet, dass** in mindestens einem weiteren Abschnitt (Sn-2, S3) des Transportpfads (P) die Bewegung des Wafers (10) entschleunigt oder beschleunigt wird, um eine Schwingung in der Bewegung des Wafers (10) zu dämpfen, die durch die Entschleunigung in dem letzten Abschnitt (Sn) oder die in dem ersten Abschnitt (S1) verursachte Beschleunigung verursacht wurde.

5. Verfahren nach mindestens einem der vorhergehenden Ansprüche, **dadurch gekennzeichnet, dass** in mindestens einem Abschnitt (S1, S2, ... Sn) der Absolutwert der Beschleunigung oder Entschleunigung konstant bleibt.

6. Verfahren nach mindestens einem der vorhergehenden Ansprüche, **dadurch gekennzeichnet, dass** der Wafer (10) durch die mechanischen Gerätschaften um eine theta-Achse herum transportiert wird.

7. Verfahren nach mindestens einem der vorhergehenden Ansprüche, **dadurch gekennzeichnet, dass** ein zeitoptimaler Transportpfad (P) berechnet wird.

8. Verfahren nach mindestens einem der vorhergehenden Ansprüche, **dadurch gekennzeichnet, dass** die Beschleunigungen (A1, A2, A3) lineare oder geometrische oder Sinusfunktionen oder Kombinationen davon sind.

9. Vorrichtung (1) zum Dämpfen von Schwingungen, von denen erwartet werden kann, dass sie durch mechanische Gerätschaften zum Bewegen eines Wafers (10) entlang eines festgelegten Transportpfads (P) ausgeübt werden, wobei die Vorrichtung umfasst:
ein Antriebsmittel (2) zum Bewegen des Wafers (10) und eine Steuervorrichtung (4) zum Steuern des Antriebsmittels (2),
wobei das Antriebsmittel (2) die Bewegung so steuert, dass die Bewegung des Wafers (10) in eine Vielzahl aufeinander folgender Pfadabschnitte (S1, S2, Sn) unterteilt wird, und dass die Bewegung des Wafers (10) während der Bewegung in dem ersten Pfadabschnitt (S1) mit einer ersten festgelegten Beschleunigung (A1) beschleunigt wird und während der Bewegung in dem letzten Pfadabschnitt (Sn) mit der letzten Entschleunigung (An) entschleunigt wird, und
wobei das Antriebsmittel (2) die Bewegung ferner so steuert, dass der Wafer (10) in einem zweiten Abschnitt (S2) nach dem ersten Abschnitt (S1) mit einer Beschleunigung (A2) mit einem Absolutwert, der niedriger als der Absolutwert der ersten Beschleunigung (A1) ist, bewegt wird, und wobei der Wafer (10) in einem vorletzten Abschnitt (Sn-1) vor dem letzten Abschnitt (Sn) mit einer Entschleunigung (An-1) mit einem Absolutwert bewegt wird, der niedriger als der Absolutwert der letzten Entschleunigung (An) ist, **dadurch gekennzeichnet, dass**
das Antriebsmittel (2) ferner die Bewegung so steuert, dass in mindestens einem weiteren Abschnitt (S3, Sn-2), wobei der weitere Abschnitt sich zwischen dem zweiten Abschnitt (S2) und dem vorletzten Abschnitt (Sn-1) befindet, die Bewegung des Wafers (10) mit einer dritten Beschleunigung (A3) beschleunigt oder entschleunigt wird, so dass ein Verhältnis zwischen der ersten Beschleunigung (A1) und der dritten Beschleunigung (A3) kleiner als 1 ist und ein Wert ist, der die Dämpfung der Oszillation kennzeichnet, die durch die erste Beschleunigung (A1) ausgeübt oder induziert worden ist, um eine Schwingung in der Bewegung des Wafers (10) zu dämpfen, die durch eine Beschleunigung oder eine Entschleunigung verursacht worden ist oder verursacht wird.

10. Vorrichtung (1) nach Anspruch 9, **dadurch gekennzeichnet, dass** das Antriebsmittel (2) konfiguriert ist, um einen Transportarm (14) anzutreiben, an dem der Wafer (10) befestigt ist.

11. Vorrichtung (1) nach Anspruch 9 oder 10, **dadurch gekennzeichnet, dass** die Vorrichtung einen Reinraum (8) umfasst, in den sich der Transportpfad (P) erstreckt.

12. Vorrichtung (1) nach mindestens einem der Ansprüche 9 bis 11, **dadurch gekennzeichnet, dass** die mechanischen Gerätschaften zum Transportieren des Wafers (10) um eine theta-Achse konfiguriert sind.

13. Vorrichtung (1) nach mindestens einem der Ansprüche 9 bis 12, **dadurch gekennzeichnet, dass** die Beschleunigungen (A1, A2, A3) lineare oder geometrische oder Sinusfunktionen oder Kombinationen davon sind.

## Revendications

1. Procédé d'amortissement de vibrations qui sont susceptibles d'être exercées par du matériel mécanique pour déplacer une galette (10) le long d'un chemin de transport prédéterminé (P), dans lequel la galette (10) est déplacée d'une première position géométrique (A) à une seconde position géométrique (B) le long du chemin de transport prédéterminé (P) et dans lequel le mouvement de la galette (10) est divisé en une pluralité de sections de chemin successives (S1, S2, ..., Sn) et dans lequel le mouvement de la galette (10) est accéléré pendant un mouvement dans la première section de chemin (S1) avec une première accélération prédéterminée (A1) et est décéléré pendant un mouvement dans la dernière section de chemin (Sn) avec une dernière décélération prédéterminée (An), dans lequel la galette (10) est déplacée dans une deuxième section (S2) consécutive à la première section (S1) avec une accélération (A2) ayant une valeur absolue qui est inférieure à la valeur absolue de la première accélération (A1), et dans lequel la galette (10) est déplacée dans une avant-dernière section (Sn-1) avant la dernière section (Sn) à une décélération (An-1) ayant une valeur absolue qui est inférieure à la valeur absolue de la dernière décélération (An)
**caractérisé en ce que**
dans au moins une section supplémentaire (S3, Sn-2) du chemin de transport (P), laquelle section supplémentaire est située entre la deuxième section (S2) et l'avant-dernière section (Sn-1), le mouvement de la galette (10) est accéléré ou décéléré avec une troisième accélération (A3) de telle sorte qu'un rapport entre la première accélération (A1) et la troisième accélération (A3) soit plus petit que 1 et soit une valeur qui caractérise l'amortissement de l'oscillation qui a été exercée ou induite par la première accélération (A1), pour amortir une vibration dans le mouvement de la galette (10) provoquée ou devant être provoquée par l'accélération ou la décélération dans au moins l'une des sections.

2. Procédé selon la revendication 1,
**caractérisé en ce que**
la galette (10) n'est pas accélérée ou décélérée dans la deuxième section du chemin de transport (P).

3. Procédé selon la revendication 1 ou 2,
la galette (10) n'est pas accélérée ou décélérée dans l'avant-dernière section (Sn-1) du chemin de transport (P).

4. Procédé selon la revendication 1,
**caractérisé en ce que** dans au moins une section supplémentaire (Sn-2, S3) du chemin de transport (P), le mouvement de la galette (10) est décéléré ou accéléré pour amortir une vibration dans le mouvement de la galette (10) provoquée par la décélération dans la dernière section (Sn) ou l'accélération provoquée dans la première section (S1).

5. Procédé selon au moins l'une des revendications précédentes,
**caractérisé en ce que**
dans au moins une section (S1, S2, ... Sn), la valeur absolue de l'accélération ou de la décélération reste constante.

6. Procédé selon au moins l'une des revendications précédentes,
**caractérisé en ce que**
la galette (10) est transportée par le matériel mécanique autour d'un axe thêta.

7. Procédé selon au moins l'une des revendications précédentes,
**caractérisé en ce que**
un chemin de transport optimal dans le temps (P) est calculé.

8. Procédé selon au moins l'une des revendications précédentes,
**caractérisé en ce que**
les accélérations (A1, A2, A3) sont des fonctions linéaires ou géométriques ou sinus ou leurs combinaisons.

9. Dispositif (1) d'amortissement de vibrations qui sont susceptibles d'être exercées par du matériel mécanique pour déplacer une galette (10) le long d'un chemin de transport prédéterminé (P), dans lequel le dispositif comprend
un moyen d'entraînement (2) destiné à déplacer la galette (10), et
un dispositif de commande (4) destiné à commander le moyen d'entraînement (2),
dans lequel le moyen d'entraînement (2) commande le mouvement de telle sorte que le mouvement de la galette (10) soit divisé en une pluralité de sections de chemin consécutives (S1, S2, Sn) et que le mouvement de la galette (10) soit accéléré pendant un mouvement dans la première section de chemin (S1) avec une première accélération prédéterminée (A1) et soit décéléré pendant un mouvement dans la dernière section de chemin (Sn) avec une dernière décélération (An), et
dans lequel le moyen d'entraînement (2) commande en outre le mouvement de telle sorte que la galette (10) soit déplacée dans une deuxième section (S2) consécutive à la première section (S1) avec une accélération (A2) ayant une valeur absolue qui est inférieure à la valeur absolue de la première accélération (A1) et dans lequel la galette (10) est déplacée dans une avant-dernière section (Sn-1) avant la dernière section (Sn) à une décélération (An-1) ayant une valeur absolue qui est inférieure à la valeur absolue de la dernière décélération (An)
**caractérisé en ce que**
le moyen d'entraînement (2) commande en outre le mouvement de telle sorte que dans au moins une section supplémentaire (S3, Sn-2), laquelle section supplémentaire est située entre la deuxième section (S2) et l'avant-dernière section (Sn-1), le mouvement de la galette (10) soit accéléré ou décéléré avec une troisième accélération (A3) de telle sorte qu'un rapport entre la première accélération (A1) et la troisième accélération (A3) soit plus petit que 1 et soit une valeur qui caractérise l'amortissement de l'oscillation qui a été exercée ou induite par la première accélération (A1), pour amortir une vibration dans le mouvement de la galette (10) provoquée ou devant être provoquée par une accélération ou une décélération.

10. Dispositif (1) selon la revendication 9,
**caractérisé en ce que** le moyen d'entraînement (2) est configuré pour entraîner un bras de transport (14) auquel est attachée la galette (10).

11. Dispositif (1) selon la revendication 9 ou 10,
**caractérisé en ce que**
le dispositif comprend une salle blanche (8) dans laquelle s'étend le chemin de transport (P).

12. Dispositif (1) selon au moins l'une des revendications 9 à 11,
**caractérisé en ce que**
le matériel mécanique est configuré pour transporter la galette (10) autour d'un axe thêta.

13. Dispositif (1) selon au moins l'une des revendications 9 à 12,
**caractérisé en ce que**
les accélérations (A1, A2, A3) sont des fonctions linéaires ou géométriques ou sinus ou leurs combinaisons.
